# EUROPÄISCHE PATENTSCHRIFT

(11) **EP 3 943 241 B1**
(45) Veröffentlichungstag und Bekanntmachung des Hinweises auf die Patenterteilung: **10.09.2025**
(21) Anmeldenummer: 21187042.3
(22) Anmeldetag: 21.07.2021
(51) Int. Cl.: B24B 21/00, B24B 49/02, B24B 49/14, B24B 49/16

(54) **VERFAHREN ZUM SCHLEIFEN EINER OBERFLÄCHE EINES WERKSTÜCKES UND VORRICHTUNG DAZU**
METHOD OF GRINDING A SURFACE OF A WORKPIECE AND DEVICE FOR SAME
PROCÉDÉ DE PONÇAGE D'UNE SURFACE D'UNE PIÈCE ET DISPOSITIF CORRESPONDANT

(30) Priorität: 21.07.2020 DE 102020119149
(43) Veröffentlichungstag der Anmeldung: 26.01.2022
(73) Patentinhaber: Karl Heesemann Maschinenfabrik GmbH & Co. KG, 32547 Bad Oeynhausen (DE)
(72) Erfinder:
(74) Vertreter: Eisenführ Speiser

(56) Entgegenhaltungen:
- DE-A1- 102016 116 622
- DE-A1- 102018 105 133
- US-A- 6 102 781
- US-A1- 2019 224 804

## Beschreibung

Die Erfindung betrifft ein Verfahren zum Schleifen einer Oberfläche eines Werkstückes mittels einer Schleifmaschine, die wenigstens zwei Schleifaggregate aufweist. Die Erfindung betrifft zudem eine Vorrichtung zum Durchführen eines derartigen Verfahrens.

Bei der Oberflächenbearbeitung von Holz, Metall und Sondermaterialien, wie beispielsweise Papierwaben kommen Schleifmaschinen sowohl für den Flächenschliff als auch für die Kanten- und Profilbearbeitung zum Einsatz. Aufgrund der großen Nachfrage nach möglichst individuellen Werkstücken und Gegenständen sinken dabei die Losgrößen, sodass eine große Variation sowohl im Ausgangsmaterial als auch im gewünschten Endprodukt auftreten. Auch bei großen Losgrößen und in großen Mengen zu produzierenden Werkstücken können Schwankungen im Schleifprozess auftreten, die beispielsweise durch Verschleiß der verwendeten Schleifmittel, Unterschiede in den zu Schleifenden Werkstücken, beispielsweise in der Dicke auf getragener Schichten, Abmessungen oder Schwankungen der Farbe, und eine Reihe weiterer Parameter hervorgerufen werden können.

Um ein bei möglichst jedem Werkstück optimales Schleifergebnis zu erhalten, muss auf diese Schwankungen und Änderungen eingegangen und der jeweilige Schleifprozess entsprechend angepasst werden. Aus dem Stand der Technik sind eine Reihe unterschiedlicher Ansätze bekannt, um dies zumindest ansatzweise zu ermöglichen.

Aus der DE 34 02 104 C2 ist beispielsweise eine Bandschleifmaschine bekannt, deren Druckbalken, der das Schleifmittel auf das zu schleifende Werkstück, in eine Mehrzahl von nebeneinander angeordneten Druckschuhen aufgeteilt ist, die getrennt und unabhängig voneinander angesteuert werden können. Auf diese Weise lässt sich der auf das zu schleifende Werkstück aufgebrachte Druck ortsabhängig gestalten. Der durch den jeweiligen Druckschuh aufgebrachte Druck wird insbesondere durch die Form des zu schleifenden Werkstückes sowie örtliche und zeitliche Daten des Transportvorganges bestimmt.

Die DE 10 2018 105 133 A1 beschreibt ein Verfahren zum Betreiben einer Schleifenvorrichtung, bei der nach dem Schleifen eine Datenerfassungseinrichtung verwendet wird, um die geschliffene Oberfläche des Werkstückes möglichst digital zu erfassen und mit Sollwerten zu vergleichen. Ist die Abweichung, die auf diese Weise festgestellt wird, größer als ein vorbestimmter Grenzwert, werden Schleifparameter verändert, um beim nächsten Werkstück ein möglichst optimales Schleifergebnis zu erreichen. Die DE 10 2018 202 618 A1 beschreibt ein Verfahren, bei dem das geschliffene Werkstück mit einer Thermographie-Einrichtung erfasst wird. Nachteilig ist jedoch, dass das mit der zu großen Abweichung hergestellte Werkstück als Ausschuss behandelt und nicht verkauft werden kann. Aus der DE 10 2010 011 470 B4 ist ein Verfahren und eine Vorrichtung bekannt, bei der ein Radarsensor am Werkzeugträger angeordnet ist, der während des spanabhebenden Bearbeiten des Werkstückes dessen Oberfläche vermisst.

Aus dem Stand der Technik ist es zudem bekannt, den Verschleiß des Schleifmittels zu überwachen. Verfahren dazu finden sich beispielsweise in der DE 10 2017 208 498 A1 oder der DE 10 2017 106 548 A1. Damit kann erkannt werden, wann der Verschleiß eines Schleifmittels zu Problemen beim Schleifergebnis führt.

Der Erfindung liegt die Aufgabe zugrunde, ein Verfahren zum Schleifen einer Oberfläche eines Werkstückes vorzuschlagen, mit dem schnell und sicher auf Schwankungen und durch Verschleiß der Werkzeuge bedingte kontinuierliche Veränderungen im Schleifergebnis reagiert werden kann, um einerseits die Menge des produzierten Ausschusses zu reduzieren, eine im Ergebnis gleichbleibende Produktqualität sicherzustellen und die zu erwartende Lebenszeit der Werkzeuge zu erhöhen.

Die Erfindung löst die gestellte Aufgabe durch ein Verfahren zum Schleifen einer Oberfläche eines Werkstückes mittels einer Schleifmaschine, die wenigstens zwei Schleifaggregate aufweist, wobei das Verfahren folgende Schritte aufweist:
a. Bereitstellen eine Beschreibung einer zu erreichenden Soll-Struktur der Oberfläche,
b. Schleifen der Oberfläche mittels eines ersten der wenigstens zwei Schleifaggregate, wobei ein vorbestimmter Satz Schleifparameter verwendet wird,
c. Erfassen einer Ist-Struktur der geschliffenen Oberfläche,
d. Vergleichen der erfassten Ist-Struktur mit der Soll-Struktur,
e. Anpassen eines Satzes Schleifparameter eines zweiten der wenigstens zwei Schleifaggregate in Abhängigkeit des Vergleiches und
f. Schleifen der Oberfläche mittels des zweiten der wenigstens zwei Schleifaggregate, wobei der angepasste Satz Schleifparameter verwendet wird.

Bei dem erfindungsgemäßen Verfahren wird die Oberfläche des Werkstückes mit den Schleifmitteln wenigstens zweier Schleifaggregate geschliffen. Dazwischen, also nach dem ersten Schleifvorgang im Verfahrensschritt b, wird eine Ist-Struktur der bereits einmal geschliffenen Oberfläche erfasst. Auf der Grundlage des Ergebnisses dieses Vergleiches werden die Schleifparameter des zweiten zu verwendenden Schleifaggregates bestimmt und angepasst. Danach wird die bereits einmal geschliffene Oberfläche mittels des zweiten zu verwendenden Schleifaggregates geschliffen, wobei der angepasste Satz Schleifparameter verwendet wird. Es ist folglich möglich, mit dem zweiten Schleifvorgang auf das Ergebnis des ersten Schleifvorganges zu reagieren und eventuell aufgetretene Abweichungen, Fehler oder Ungenauigkeiten auszugleichen. Dies ist mit den Verfahren aus dem Stand der Technik nicht möglich. Dort kann nur nach dem Schleifen festgestellt werden, ob das Ergebnis zufriedenstellend ist. Falls dies nicht der Fall ist, kann für das nächste oder ein späteres Werkstück der Satz Schleifparameter angepasst und so die Qualität verbessert werden. Die Menge des Ausschusses bleibt jedoch unverändert.

In einer bevorzugten Ausgestaltung betrifft die zu erreichende Soll-Struktur die Struktur, die nach dem ersten Schleifen erreicht werden soll. Um nach dem Abschluss des Verfahrens das Schleifergebnis zu überprüfen, ist es von Vorteil, auch eine zu erreichende Soll-Endstruktur zu bestimmen und eine Beschreibung dieser Soll-Endstruktur bereitzustellen. Nach dem Schleifen des Werkstückes mit allen zu verwendenden Schleifaggregates kann erneut eine Ist-Struktur erfasst und mit der Soll-Endstruktur verglichen werden. Daraus können wichtige Ergebnisse für spätere Werkstücke und die bei diesem zu verwendenden Schleifparameter gewonnen werden.

Die Beschreibung einer Soll-Struktur kann auf unterschiedlichste Weise vorliegen. In einer Ausgestaltung liegt die Beschreibung in Form wenigstens eines digitalen Bildes vor. Dies kann beispielsweise ein Digitalfoto der zu erreichenden Oberflächengestaltung sein. In einer besonders bevorzugten Ausführungsform handelt es sich um ein Farbfoto, welches unterschiedliche Wellenlängen des Lichtes beinhaltet. Alternativ dazu können auch mehrere monochromatische Fotos verwendet werden, zu deren Erstellung jeweils nur Licht einer einzigen Wellenlänge oder eines schmalen Wellenlängenbereich von beispielsweise weniger als 50 nm, bevorzugt weniger als 30 nm, bevorzugt weniger als 10 nm, verwendet wurde. Vorzugsweise kann die Beschreibung auch Bilder im nicht sichtbaren Bereich, insbesondere im nahen Infrarot Bereich oder im UV-Bereich beinhalten.

Vorzugsweise verfügt die Schleifmaschine über mehr als zwei Schleifaggregate und die Oberfläche wird mittels mehr als zweier Schleifaggregate geschliffen. Vorzugsweise wird nach dem ersten Schleifen mit dem ersten der zu verwendenden Schleifaggregate eine Ist-Struktur erfasst, die mit einer entsprechenden Soll-Struktur verglichen wird. Da die so bereits einmal geschliffene Oberfläche in diesem Fall noch mit mehr als einem Schleifaggregate bearbeitet und somit noch mit mehr als einem Schleifmittel geschliffen wird, können mehrere Sätze Schleifparameter verändert und angepasst werden. Bei diesen handelt es sich um die Schleifparameter der Schleifaggregate, die noch zum Einsatz kommen. Dabei ist es durchaus möglich und auch von Vorteil, wenn mehrere Anpassungsmöglichkeiten für die unterschiedlichen Sätze Schleifparameter ermittelt werden. Es kann dann die Anpassung der unterschiedlichen Sätze Schleifparameter gewählt werden, die beispielsweise die geringste Belastung und den geringsten Verschleiß der zu verwendenden Schleifmittel zur Folge hat oder die Anpassung, bei der bereits relativ stark verschlissene Schleifmittel möglichst wenig beansprucht werden.

In einer besonders bevorzugten Ausgestaltung werden mehrere Beschreibungen von zu erreichenden Soll-Strukturen bereitgestellt, die besonders bevorzugt den zu erreichenden Soll-Strukturen nach dem ersten Schleifen, nach dem zweiten Schleifen und/oder nach weiteren Schleifenvorgängen entsprechen. Nach jedem der Schleifenvorgänge, zu denen eine Beschreibung einer Soll-Struktur bereitgestellt wurde, wird vorzugsweise auch eine Ist-Struktur erfasst, die mit der jeweiligen Soll-Struktur verglichen wird. Auf der Basis dieses Vergleiches werden vorzugsweise die Sätze Schleifparameter aller weiteren zu verwendenden Schleifaggregate angepasst. Dies kann dazu führen, dass insbesondere der Satz Schleifparameter eines recht spät im Produktionsprozess zu verwendenden Schleifaggregates mehrfach verändert und angepasst wird, bevor er tatsächlich verwendet wird, um mit dem entsprechenden Schleifaggregat die Oberfläche des Werkstückes zu bearbeiten.

In einer bevorzugten Ausgestaltung wird vor jedem Schleifvorgang, bei dem eines der Schleifaggregate verwendet wird, eine Ist-Struktur der Oberfläche erfasst und mit der entsprechenden Soll-Struktur verglichen. Auf der Basis des Ergebnisses dieses Vergleiches wird der Satz Schleifparameter, der beim Schleifen mit dem jeweiligen Schleifaggregat verwendet werden soll, angepasst. Besonders bevorzugt wird vor dem Schleifen der Oberfläche mit dem ersten zu verwendenden Schleifaggregat, das vorteilhafterweise, jedoch nicht notwendigerweise das erste Schleifaggregat der Schleifmaschine ist, eine Ist-Struktur der Oberfläche erfasst. Auf diese Weise kann auch der erste zu verwendende Satz Schleifparameter, mit dem das erste zu verwendende Schleifaggregat betrieben und konfiguriert wird, individuell an die Gegebenheiten des jeweiligen Werkstückes angepasst werden. Vorteilhafterweise wird ein Verschleißzustand wenigstens eines Schleifmittels wenigstens eines der Schleifaggregate ermittelt, wobei der Satz Schleifparameter zumindest dieses Schleifaggregates, dessen Verschleißzustand ermittelt wurde, bevorzugtjedoch aller später zu verwendenden Schleifaggregate in Abhängigkeit des ermittelten Verschleißzustands des angepasst wird. Auf diese Weise werden die Abweichungen, die beim Schleifen der Oberfläche mit dem betreffenden Schleifmittel auftreten können, reduziert, da einem durch den Verschleiß des Schleifmittels auftretenden Fehler oder einer entsprechenden Abweichung des Schleifergebnis von der Soll-Struktur bereits im Vorhinein entgegengewirkt werden kann.

Vorzugsweise ist die Beschreibung der Soll-Struktur eine Abbildung einer Referenz-Oberfläche oder die Referenz-Oberfläche selbst. Die Abbildung ist dabei vorzugsweise eine fotografische Abbildung. Dies ist jedoch nicht notwendig. Auch Messdaten anderer Sensoren, beispielsweise Thermographie-Sensoren, Radar-Sensoren oder sonstiger Sensoren, können verwendet werden, sofern eine Beschreibung der Oberfläche durch die Messdaten erfolgen kann. Welche Art von Messdaten oder Beschreibung für das jeweilige Verfahren tatsächlich gewählt wird, hängt davon ab, welche Eigenschaften die zu schleifende Oberfläche nach dem Schleifen aufweisen soll. In der Regel wird durch das Schleifen das optische Erscheinungsbild der Oberfläche verändert und soll in ein gewünschtes Erscheinungsbild überführt werden. Daher werden in der Regel fotografische Abbildungen einer Referenz-Oberfläche als Beschreibung der Soll-Struktur Verwendung finden. Dabei ist die Soll-Struktur 2-dimensional oder 3-dimensional. Während beispielsweise in eine Oberfläche einzubringende Schleifmuster eher einer zweidimensionalen Beschreibung einer Soll-Struktur entsprechen, werden für Werkstücke, die eine unebene Oberfläche aufweisen, eher dreidimensionale Beschreibungen einer Soll-Struktur von Vorteil sein.

Bevorzugt beinhaltet ein Satz Schleifparameter eine Vorschubgeschwindigkeit, mit der das Werkstück durch die Schleifmaschine transportiert wird, eine Schleifmittel-Geschwindigkeit, mit der sich das Schleifmittel bewegt, einen Druck, mit dem das Schleifmittel an das Werkstück gedrückt wird und/oder dessen räumliche und/oder zeitliche Verteilung. Zusätzlich oder alternativ dazu enthält der Satz Schleifparameter vorzugsweise ein innerhalb eines Schleifaggregates zu wählendes Schleifmittel oder das zu wählende Schleifaggregat selbst. Zusätzlich oder alternativ dazu wird die Art und/oder Anzahl des oder der zu verwendenden Schleifaggregate und/oder des oder der darin zu verwendenden Schleifmittel vorzugsweise in Abhängigkeit des Ergebnisses des Vergleiches zwischen erfasster Ist-Struktur und Soll-Struktur nach oder vor einem Druckvorgang ermittelt. Zusätzlich oder alternativ dazu wird ein Weg wenigstens eines Druckschuhs und/oder Druckbalkens aus einer Ruheposition in die Schleifposition ermittelt. Das Schleifmittel wird vorzugsweise durch wenigstens ein Druckelement gegen die zu schleifende Oberfläche gedrückt. Dies ist beispielsweise bei Schleifbändern bekannt. Dazu wird das Schleifband zwischen dem jeweiligen Druckelement und dem zu schleifenden Werkstück angeordnet und das Druckelement über einen Druck auf das Schleifmittel in Richtung auf das zu schleifende Werkstück aus. Insbesondere wenn das Schleifmittel durch ein einziges Druckelement gegen das Werkstück gedrückt wird, spricht man von einem Druckbalken. Dieser erstreckt sich vorzugsweise über die gesamte Breite des Schleifmittels. Sind mehrere Druckmittel vorhanden, die vorzugsweise nebeneinander angeordnet sind, wird von Druckschuhen gesprochen. Wird das jeweilige Schleifmittel nicht verwendet, wird kein Druck durch das Druckelement aufgebracht. Das Druckelement befindet sich dann in der Ruheposition. Der Weg, den das Druckelement zurücklegen muss, um einen Schleifdruck auf das Schleifmittel auszuüben, wird vorzugsweise gemessen. Die Position, in der das Druckelement den Druck aufbringt, wird Schleifposition genannt.

Vorzugsweise wird wenigstens ein Satz Schleifparameter, vorzugsweise alle Sätze Schleifparameter in Abhängigkeit von Sensormessdaten vorbestimmt und/oder angepasst, die erhalten werden aus
- wenigstens einer Schall-, Schwingung- und/oder Kraftmessung an einem Druckschuh und/oder Druckbalken wenigstens eines Schleifaggregates,
- wenigstens einer Wegmessung an wenigstens einem Druckschuh und/oder einem Druckbalken,
- wenigstens einer Oberflächen- und/oder Dickenmessung des Werkstückes,
- einer Rauigkeit-, Temperatur- und/oder Schlupfmessung wenigstens eines Schleifmittels und/oder
- einer farblichen, kapazitiven und/oder geometrischen Messung der Oberfläche wenigstens eines Schleifmittels.

Einige dieser Messungen können vor dem eigentlichen Schleifen, insbesondere vor dem ersten Schleifvorgang geführt werden. So kann beispielsweise die Oberfläche und/oder die Dicke des zu schleifenden Werkstückes vor dem ersten Schleifvorgang 30 bestimmt werden. Dies geschieht bevorzugt am Eingang der Schleifmaschine. Die Rauigkeit, die Temperatur und/oder der Schlupf wenigstens eines Schleifmittels können kontinuierlich, vorzugsweise jedoch wenigstens wiederholt, gemessen werden. Dabei sind regelmäßige Wiederholungen von Vorteil, unabhängig davon, ob und wenn ja wie oft das Schleifmittel zum Schleifen eines Werkstückes verwendet wird.

Gleiches gilt für die Messung der Oberfläche des Schleifmittels, aus der ein Verschleißzustand ermittelt werden kann. Die Messungen, die an einem oder mehreren Druckschuhen oder Druckbalken wenigstens eines Schleifaggregates durchgeführt werden, sind vorzugsweise während des Schleif-Vorganges durchzuführen. Sie werden bevorzugt mehrfach während des Schleifens eines einzelnen Werkstückes durchgeführt. Selbstverständlich ist es auch möglich, bei einem Werkstück nur einmal die Messungen am Druckschuhe oder Druckbalken durchzuführen. Vorteilhafterweise werden die Messergebnisse verwendet, um möglichst viele der Schleifparametersätze der Schleifaggregate, die beim Schleifen des zu bearbeitenden Werkstückes verwendet werden sollen, anzupassen.

Vorteilhafterweise verfügt die Schleifmaschine über mehr Schleifaggregate, als beim Schleifen verwendet werden. Mit anderen Worten wird die Oberfläche des Werkstückes nicht mittels aller Schleifaggregate der Schleifmaschine geschliffen. Die verwendeten oder zu verwendenden Schleifaggregate werden dabei bevorzugt unter Berücksichtigung des Verschleißzustandes der Schleifmittel aller Schleifaggregate ausgewählt. So werden bevorzugt die Schleifmittel und Schleifaggregate verwendet, die beispielsweise einen möglichst geringen Verschleiß aufweisen, um eine möglichst gleichmäßige Beanspruchung und einen möglichst gleichmäßigen Verschleiß aller Schleifmittel der Schleifaggregate zu erreichen. Alternativ dazu kann beispielsweise auch ein bereits besonders verschlissenes Schleifmittel ausgewählt werden, um möglichst zeitnah das Schleifmittel austauschen zu können, sofern dazu gerade ein günstiger Zeitpunkt ist. Ist beispielsweise abzusehen, dass das Schleifmittel ansonsten bei einem Schichtwechsel der Nutzer der Schleifmaschine gewechselt werden müsste, ist dieses Vorgehen von Vorteil. Dadurch wird der Zeitpunkt nach vorn verschoben, sodass er nicht in den ungünstigen zeitlichen Bereich fällt. Durch die Auswahl der verwendeten oder zu verwendenden Schleifaggregate lässt sich folglich insbesondere der Zeitpunkt des Wechsels einzelner Schleifmittel verändern und nach vorn oder hinten verschieben, in dem das Schleifmittel mehr oder weniger häufig verwendet wird.

In einer besonders bevorzugten Ausgestaltung wird die Position des Werkstückes relativ zu wenigstens einen Schleifmittel wenigstens eines Schleifaggregates unter Berücksichtigung des Verschleißzustandes des Schleifmittels angepasst. Dies ist insbesondere dann von Vorteil, wenn einzelne Bereiche eines Schleifmittels stärkeren Verschleiß aufweisen als andere Bereiche. Ein Bandschleifgerät mit einem Schleifenband, das sich beispielsweise parallel zur Vorschubrichtung bewegt, kann ein Beispiel sein für einen derartigen ungleichmäßigen Verschleiß. Werden beispielsweise eine Mehrzahl von Werkstücken geschliffen, die am linken Rand einer Transportvorrichtung angeordnet werden, die die Werkstücke durch die Schleifmaschine transportiert, wird auch das Schleifenband im linken Bereich stärker verschleißen als im rechten. Es ist daher von Vorteil, die Position des Werkstückes auf der Transportvorrichtung und damit relativ zum Schleifmittel und zum Schleifaggregat unter Berücksichtigung des Verschleißzustandes anzupassen, um zu verhindern, dass ein Schleifmittel ausgewechselt werden muss, obwohl ein räumlicher Bereich des Schleifmittels für Schleifprozesse ausreichend Schleifwirkung aufweist.

Vorzugsweise wird das Werkstück als Ausschuss ausgeschleust, wenn beim Vergleichen der erfassten Ist-Struktur mit der Soll-Struktur erkannt wird, dass die Soll-Struktur nicht erreicht werden kann oder wenn wenigstens ein Parameter des angepassten Satzes Schleifparameter außerhalb eines vorbestimmten Wertebereich liegt, wobei vorzugsweise eine Vorschubgeschwindigkeit erhöht wird. Ist die Abweichung der erfassten Ist-Struktur von der Soll-Struktur so groß, dass die Soll-Struktur durch das Schleifen in weiteren Schleifaggregaten nicht erreicht werden kann, wird das Werkstück in dieser Ausgestaltung des Verfahrens als Ausschuss ausgeschleust. Alternativ oder zusätzlich dazu geschieht dies, wenn die Soll-Struktur zwar noch erreicht werden kann, die dazu nötigen Schleifparameter der folgenden Schleifaggregate oder des folgenden Schleifaggregates jedoch wenigstens einen Parameter beinhalten, der außerhalb eines vorbestimmten Wertebereichs liegt. Dies können beispielsweise Parameter sein, die zwar möglich sind, das Schleifaggregat und/oder das Schleifmittel jedoch beispielsweise beschädigen oder unverhältnismäßigem Verschleiß aussetzen würden. Besonders bevorzugt wird die Vorschubgeschwindigkeit, mit der das Werkstück durch die Schleifmaschine gefördert wird, erhöht, wenn ein Werkstück als Ausschuss ausgeschleust werden soll.

Die Erfindung löst die gestellte Aufgabe zudem durch eine Schleifmaschine zum Durchführen eines Verfahrens nach einem der vorstehenden Ansprüche. Die Schleifmaschine verfügt vorzugsweise über eine elektronische oder elektrische Steuerung, insbesondere eine elektronische Datenverarbeitungseinrichtung, die eingerichtet ist, eine erfasste Ist-Struktur mit einer vorzugsweise in einem elektronischen Datenspeicher hinterlegten Beschreibung einer Soll-Struktur zu vergleichen und auf der Basis des Ergebnisses dieses Vergleiches die nachfolgend zu verwendenden Schleifaggregate so anzusteuern, dass geänderte und angepasste Sätze Schleifparameter verwendet werden. Vorzugsweise verfügt die elektronische Datenverarbeitungseinrichtung dafür über ein Vergleichsmodul, welches den eigentlichen Vergleich durchführt. Ein Korrekturmodul ermittelt aus dem Ergebnis dieses Vergleiches die vorzunehmenden Anpassungen am Satz Schleifparameter. Vorzugsweise wird dieser angepasste Satz Schleifparameter oder zumindest die vorzunehmenden Anpassungen und Änderungen gegenüber dem bisherigen Satz Schleifparameter mittels eines Kommunikationsmoduls an das jeweilige Schleifengerät übermittelt. Die unterschiedlichen hier beschriebenen Module können auch als Software und Programme für elektronische Datenverarbeitungseinrichtungen ausgebildet sein. Verfügt die Schleifmaschine zudem über wenigstens einem Sensor, um die hier beschriebenen Sensormessdaten zu ermitteln, ist es von Vorteil, wenn das Korrekturmodul auf die Sensormesse zu greifen kann und diese in die Ermittlung der vorzunehmenden Anpassungen einbezieht.

Mit Hilfe der beigefügten Figuren werden nachfolgend einige Ausführungsbeispiele der vorliegenden Erfindung näher erläutert. Es zeigen:
- Figur 1: eine schematische Darstellung einer Schleifmaschine gemäß einem Ausführungsbeispiel der vorliegenden Erfindung und
- Figur 2: ein Flussdiagram eines Verfahrens gemäß einem weiteren Ausführungsbeispiel der vorliegenden Erfindung.

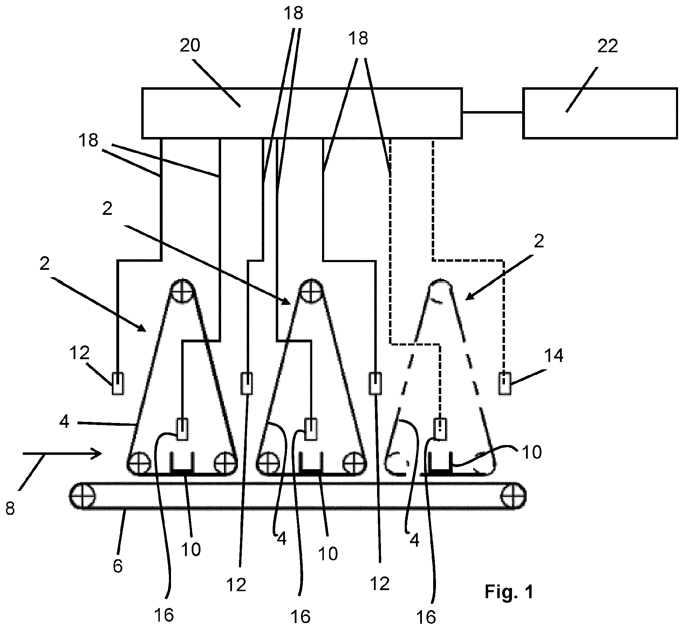

Figur 1 zeigt schematisch eine Schleifmaschine gemäß einem Ausführungsbeispiel der vorliegenden Erfindung. Sie verfügt über drei Schleifaggregate 2, die jeweils ein Schleifmittel 4, im gezeigten Ausführungsbeispiel jeweils ein Schleifband, aufweisen. Über ein Transportband 6 werden die zu schleifenden Werkstücke, die in Figur 1 nicht dargestellt sind, entlang der durch den Pfeil 8 dargestellten Richtung durch die Schleifmaschine gefördert. Jedes der Schleifmittel 4 wird mittels eines separaten Druckelementes 10, das in Figur 1 als Druckbalken ausgebildet ist, an ein zu schleifendes Werkstück angedrückt. Verschiedene Sensoren sind vorhanden, um unterschiedliche Messwerte aufzunehmen und unterschiedliche Parameter zu messen.

Die in Figur 1 gezeigte Schleifmaschine verfügt über drei Oberflächensensoren 12, die eingerichtet sind, eine Ist-Struktur der Oberfläche des Werkstückes zu erfassen. Die Oberflächensensoren 12 können als Kamera im sichtbaren oder nicht sichtbaren Wellenlängenbereich, 3D-Scanner oder andere Sensoren ausgebildet sein. In Vorschubrichtung hinter dem letzten Schleifaggregat ist ein Schlusssensor 14 angeordnet, der ebenfalls als Oberflächensensor ausgebildet ist und das fertige Schleifergebnis, also die Ist-Struktur nach dem letzten Schleifvorgang, erfasst.

In Figur 1 sind zudem weitere Messsensoren 16 gezeigt, die innerhalb der einzelnen Schleifaggregate 2 angeordnet sind. Sie stehen beispielhaft für verschiedene Sensorenarten, die verwendet werden können, um Messwerte aufzunehmen, auf deren Grundlage ein angepasster Satz Schleifparameter bestimmt oder angepasst werden kann. Im in Figur 1 gezeigten Ausführungsbeispiel sind die Messsensoren 16 eingerichtet, den Weg des Druckelementes 10 von der Ruheposition, die in Figur 1 dargestellt ist, bis zu einer Schleifposition zu bestimmen. Über Signalleitungen 18 werden die von den Sensoren 12, 14, 16 aufgenommenen Signale an eine elektronische Datenverarbeitungseinrichtung 20 übermittelt. Die Signalleitungen 18 der Sensoren 12, 14, 16 des letzten Schleifaggregates 2 sind gestrichelt dargestellt, um zu illustrieren, dass diese Sensoren 12, 14, 16 optional sind und nicht für die Bestimmung eines angepassten Satzes Schleifparameter verwendet werden. Die elektronische Datenverarbeitungseinrichtung 20 verfügt über ein Eingabemodul 22, mittels dessen ein Benutzer der Schleifmaschine in die Steuerung eingreifen, neue Parameter eingeben oder die Maschine auf sonstige Weise bedienen kann.

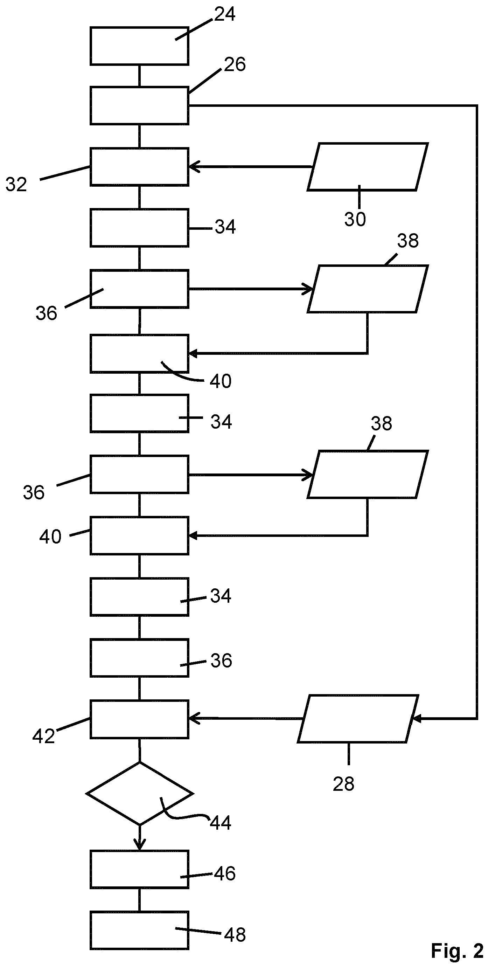

Figur 2 zeigt schematisch einen Ablauf eines Verfahrens gemäß einem Ausführungsbeispiel der vorliegenden Erfindung. Nach dem Start 24 des Verfahrens werden mittels einer Werkstückerkennung 26 Parameter des zu schleifenden Werkstückes, insbesondere seine Breite und/oder Dicke erkannt und zunächst gespeichert. Diese Parameter und Daten bezüglich der Werkstücke werden verwendet, um in der elektronischen Datenverarbeitungseinrichtung 22 eine gleichmäßige Beanspruchung der Schleifmittel 4 zu erreichen. Dies geschieht im Beanspruchungsmodul 28 der elektronischen Datenverarbeitungseinrichtung, dem die Daten und Parameter übergeben werden. Dieses Modul kann auch als Computerprogrammprodukt, beispielsweise eine Software, ausgebildet sein. Im nächsten Verfahrensschritt werden aus einem Datenspeicher 30 Oberflächen-Daten bereitgestellt, die die Soll-Struktur beschreiben. Diese Daten können 2-dimensional oder 3-dimensional vorliegen und werden einem Soll-Struktur-Modul 32 übergeben, das eine maschinenlesbare Beschreibung der Soll-Struktur bereitstellt.

Im nächsten Schritt wird die Ist-Struktur erfasst 34, die anschließend in einem Vergleichsmodul 36 der elektronischen Datenverarbeitungseinrichtung 20 mit der Soll-Struktur verglichen wird. Ergibt dieser Vergleich, dass ein angepasster Satz Schleifparameter bestimmt werden muss, wird diese Information einem Anpassungsmodul 38 übergeben, in dem der neue angepasste Satz Schleifparameter bestimmt wird. Unter Verwendung dieses angepassten Satzes Schleifparameter wird im nächsten Verfahrensschritt, der als Schleifen 40 bezeichnet wird, die Oberfläche des Werkstückes geschliffen.

Ergibt der Vergleich, dass kein angepasster Satz Schleifparameter bestimmt werden muss, übergibt das Vergleichsmodul 36 diese Information vorzugsweise direkt an das nächste Schleifaggregat oder die elektronische Datenverarbeitungseinrichtung und das Schleifen 40 findet direkt nach dem Vergleich statt.

Die so geschliffene Oberfläche wird wieder einer Ist-Struktur-Erfassung 34 unterzogen, deren Ergebnis erneut im Vergleichsmodul 36 mit der Soll-Struktur verglichen wird, woraufhin gegebenenfalls im Anpassungsmodul 38 ein angepasster Satz Schleifparameter bestimmt wird. Alternativ wird erneut ohne angepasste Schleifparameter ein Schleifen 40 durchgeführt. Als Vergleichsmodul 36 kann mehrfach das gleiche Modul verwendet werden. Alternativ können auch unterschiedliche Module als Vergleichsmodul 36 verwendet werden. Dies ist insbesondere dann von Vorteil, wenn unterschiedliche Messwerte und/oder unterschiedliche Parameter verwendet werden, um die Ist-Struktur und/oder die jeweilige Soll-Struktur verwendet werden. Gleiches gilt für das Anpassungsmodul 38.

Im in Figur 2 gezeigten Verfahrensablauf wird nach dem letzten Schleifen 40 erneut die Ist-Struktur erfasst 34 und in einem Vergleichsmodul 36 mit der Soll-Struktur verglichen. So kann die Schleifqualität beurteilt und beispielsweise Ausschuss erkannt werden. In einem Anzeigeschritt 42 wird dem Benutzer der Schleifmaschine angezeigt, wie stark das jeweilige Schleifmittel 4 beansprucht und/oder verschlissen ist. Dies wird vorzugsweise als ortsabhängige Information, vorzugsweise in Abhängigkeit von der Schleifbreite und/oder in Abhängigkeit von der Position relativ zur Breite des Schleifmittels angegeben.

In einer abschließenden Qualitätskontrolle 44 wird der letzte Vergleich der Ist-Struktur mit der Soll-Struktur für die Beurteilung herangezogen, ob das Werkstück Ausschuss ist. Ist dies nicht der Fall, wird das Werkstück der weiteren Verarbeitung 46, beispielsweise der Verpackung, zugeführt. Danach endet 48 das Verfahren.

Alle beschriebenen Module sind vorzugsweise Teil der elektronischen Datenverarbeitungseinrichtung und als Software, also Computerprogrammprodukt ausgebildet.

### Bezugszeichenliste

2 Schleifaggregat
4 Schleifmittel
6 Transportband
8 Pfeil
10 Druckelement
12 Oberflächensensor
14 Schlusssensor
16 Messsensor
18 Signalleitung
20 Elektronisch Datenverarbeitungseinrichtung
22 Eingabemodul
24 Start
26 Werkstückerkennung
28 Beanspruchungsmodul
30 Datenspeicher
32 Sollstrukturmodul
34 Ist-Struktur-Erkennung
36 Vergleichsmodul
38 Anpassungsmodul
40 Schleifen
42 Anzeigeschritt
44 Qualitätskontrolle
46 weitere Verarbeitung
48 Ende

## Patentansprüche

1. Verfahren zum Schleifen einer Oberfläche eines Werkstückes mittels einer Schleifmaschine, die wenigstens zwei Schleifaggregate (2) aufweist, wobei das Verfahren folgende Schritte aufweist:
a. Bereitstellen einer Beschreibung einer zu erreichenden Soll-Struktur der Oberfläche
b. Schleifen der Oberfläche mittels eines ersten der wenigstens zwei Schleifaggregate (2), wobei ein vorbestimmter Satz Schleifparameter verwendet wird,
c. Erfassen einer Ist-Struktur (34) der geschliffenen Oberfläche,
d. Vergleichen der erfassten Ist-Struktur mit der Soll-Struktur,
e. Anpassen eines Satzes Schleifparameter eines zweiten der wenigstens zwei Schleifaggregate in Abhängigkeit des Vergleiches und
f. Schleifen der Oberfläche (40) mittels des zweiten der wenigstens zwei Schleifaggregate, wobei der anpasste Satz Schleifparameter verwendet wird.

2. Verfahren nach Anspruch 1, **dadurch gekennzeichnet, dass** die Schleifmaschine mehr als zwei Schleifaggregate (2) aufweist und die Oberfläche mittels mehr als zweier Schleifaggregate geschliffen wird.

3. Verfahren nach Anspruch 1 oder 2, **dadurch gekennzeichnet, dass** vor jedem Schleifen mittels eines der Schleifaggregate (2) eine Ist-Struktur der Oberfläche erfasst und mit der Soll-Struktur verglichen und der beim Schleifen zu verwendende Satz Schleifparameter in Abhängigkeit des Ergebnisses des Vergleiches angepasst wird.

4. Verfahren nach einem der vorstehenden Ansprüche, **dadurch gekennzeichnet, dass** ein Verschleißzustand wenigstens eines Schleifmittels (4) wenigstens eines der Schleifaggregate (2) ermittelt wird und der Satz Schleifparameter zumindest dieses Schleifaggregates, bevorzugt aller später zu verwendenden Schleifaggregate in Abhängigkeit des ermittelten Verschleißzustandes angepasst wird.

5. Verfahren nach einem der vorstehenden Ansprüche, **dadurch gekennzeichnet, dass** die Beschreibung der Soll-Struktur eine Abbildung einer Referenz-Oberfläche oder eine Referenzoberfläche ist.

6. Verfahren nach einem der vorstehenden Ansprüche, **dadurch gekennzeichnet, dass** die Soll-Struktur 2-dimensional oder 3-dimensional ist.

7. Verfahren nach einem der vorstehenden Ansprüche, **dadurch gekennzeichnet, dass** ein Satz Schleifparameter eine Vorschubgeschwindigkeit, eine Schleifmittelgeschwindigkeit, einen Druck oder dessen räumliche und/oder zeitliche Verteilung, mit dem das Schleifmittel (4) an das Werkstück gedrückt wird, und/oder einen Weg wenigstens eines Druckschuhs und/oder Druckbalkens aus einer Ruheposition in die Schleifposition beinhaltet.

8. Verfahren nach einem der vorstehenden Ansprüche, **dadurch gekennzeichnet, dass** wenigstens ein Satz Schleifparameter, vorzugsweise alle Sätze Schleifparameter in Abhängigkeit von Sensormessdaten vorbestimmt und/oder angepasst werden, die erhalten wurden aus
- wenigstens einer Schall-, Schwingungs- und/oder Kraftmessung an einem Druckschuh und/oder Druckbalken wenigstens eines Schleifaggregates (2),
- wenigstens einer Wegmessung an wenigstens einem Druckschuh und/oder einem Druckbalken
- wenigstens einer Oberflächen- und/oder wenigstens einer Dickenmessung des Werkstückes,
- einer Rauhigkeits-, Temperatur- und/oder Schlupfmessung wenigstens eines Schleifmittels
- und/oder einer farblichen, kapazitiven und/oder geometrischen Messung der Oberfläche wenigstens eines Schleifmittels.

9. Verfahren nach einem der vorstehenden Ansprüche, **dadurch gekennzeichnet, dass** die Oberfläche nicht mittels aller Schleifaggregate (2) der Schleifmaschine geschliffen wird und die verwendeten Schleifaggregate unter Berücksichtigung des Verschleißzustandes der Schleifmittel aller Schleifaggregate ausgewählt werden.

10. Verfahren nach einem der vorstehenden Ansprüche, **dadurch gekennzeichnet, dass** eine Position des Werkstückes relativ zu wenigstens einem Schleifmittel (4) wenigstens eines Schleifaggregates (2) unter Berücksichtigung des Verschleißzustandes des Schleifmittels angepasst wird.

11. Verfahren nach einem der vorstehenden Ansprüche, **dadurch gekennzeichnet, dass** das Werkstück als Ausschuss ausgeschleust wird, wenn beim Vergleichen der erfassten Ist-Struktur mit der Soll-Struktur erkannt wird, dass die Soll-Struktur nicht erreicht werden kann oder wenn wenigstens ein Parameter des angepassten Satzes Schleifparameter außerhalb eines vorbestimmten Wertebereich liegt, wobei vorzugsweise eine Vorschubgeschwindigkeit erhöht wird.

12. Schleifmaschine zum Durchführen eines Verfahrens nach einem der vorstehenden Ansprüche, wobei die Schleifmaschine eine elektronische oder elektrische Steuerung, insbesondere eine elektronische Datenverarbeitungseinrichtung (20), aufweist, die eingerichtet ist, eine erfasste Ist-Struktur mit einer vorzugsweise in einem elektronischen Datenspeicher (30) hinterlegten Beschreibung einer Soll-Struktur zu vergleichen und auf der Basis des Ergebnisses dieses Vergleiches die nachfolgend zu verwendenden Schleifaggregate (2) so anzusteuern, dass geänderte und angepasste Sätze Schleifparameter verwendet werden.

## Claims

1. Method for sanding a surface of a workpiece by means of a sanding machine which has at least two sanding units (2), the method comprising the following steps:
a. Providing a description of a surface target structure to be achieved,
b. Sanding the surface by means of a first of the at least two sanding units (2), using a predetermined set of sanding parameters,
c. Detecting an actual structure (34) of the ground surface,
d. Comparing the detected actual structure with the target structure,
e. adapting a set of sanding parameters of a second of the at least two sanding units as a function of the comparison, and
f. Sanding the surface (40) by means of the second of the at least two sanding units, using the adapted set of sanding parameters.

2. Method according to claim 1, **characterized in that** the sanding machine has more than two sanding units (2) and the surface is sanded using more than two sanding units.

3. Method according to claim 1 or 2, **characterized in that**, before each sanding operation, an actual structure of the surface is detected by means of one of the sanding units (2) and compared with the target structure and the set of sanding parameters to be used during sanding is adapted as a function of the comparison.

4. Method according to one of the preceding claims, **characterized in that** a wear state of at least one abrasive (4) of at least one of the sanding units (2) is determined and the set of sanding parameters of at least this sanding unit,
preferably of all sanding units to be used later is adjusted depending on the determined wear state.

5. Method according to one of the preceding claims, **characterized in that** the description of the target structure is a mapping of a reference surface or a reference surface.

6. Method according to one of the preceding claims, **characterized in that** the target structure is 2-dimensional or 3-dimensional.

7. Method according to one of the preceding claims, **characterized in that** a set of sanding parameters comprises a feed speed, an abrasive speed, a pressure or its spatial and/or temporal distribution, with which the abrasive (4) is pressed against the workpiece, and/or a path of at least one pressure shoe and/or pressure beam from a rest position to the sanding position.

8. Method according to one of the preceding claims, **characterized in that** at least one set of sanding parameters, preferably all sets of sanding parameters, are predetermined and/or adapted as a function of sensor measurement data obtained from
- at least one sound, vibration and/or force measurement on a pressure shoe and/or pressure beam of at least one sanding unit (2),
- at least one displacement measurement on at least one pressure shoe and/or pressure beam
- at least one surface and/or at least one thickness measurement of the workpiece,
- a roughness, temperature and/or slip measurement of at least one abrasive
- and/or a color, capacitive and/or geometric measurement of the surface of at least one abrasive.

9. Method according to one of the preceding claims, **characterized in that** the surface is not sanded by means of all the sanding units (2) of the sanding machine and the sanding units used are selected taking into account the wear state of the abrasives of all sanding units.

10. Method according to one of the preceding claims, **characterized in that** a position of the workpiece relative to at least one abrasive (4) of at least one abrasive unit (2) is adapted taking into account the wear state of the abrasive.

11. Method according to one of the preceding claims, **characterized in that** the workpiece is ejected as scrap if, when comparing the detected actual structure with the target structure, it is detected that the target structure cannot be achieved or if at least one parameter of the adapted set of sanding parameters is outside a predetermined value range, wherein preferably a feed rate is increased.

12. A sanding machine for carrying out a method according to any one of the preceding claims, wherein the sanding machine comprises an electronic or electrical control system, in particular an electronic data processing device (20), which is set up to compare a detected actual structure with a description of a target structure preferably stored in an electronic data memory (30) and, on the basis of the result of this comparison, to determine the target structure to be used subsequently (2) in such a way that modified and adapted sets of sanding parameters are used.

## Revendications

1. Procédé de ponçage d'une surface d'une pièce à usiner au moyen d'une machine de ponçage, qui présente au moins deux groupes de ponçage (2), dans lequel le procédé présente les étapes suivantes :
a. mise à disposition d'une description d'une structure de consigne à atteindre de la surface,
b. ponçage de la surface au moyen d'un premier des au moins deux groupes de ponçage (2), dans lequel un jeu prédéterminé de paramètres de ponçage est utilisé,
c. détection d'une structure réelle (34) de la surface poncée,
d. comparaison de la structure réelle détectée avec la structure de consigne,
e. adaptation d'un jeu de paramètres de ponçage d'un deuxième des au moins deux groupes de ponçage en fonction de la comparaison et
f. ponçage de la surface (40) au moyen du deuxième des au moins deux groupes de ponçage, dans lequel le jeu adapté de paramètres de ponçage est utilisé.

2. Procédé selon la revendication 1, **caractérisé en ce que** la machine de ponçage présente plus de deux groupes de ponçage (2) et la surface est poncée au moyen de plus de deux groupes de ponçage.

3. Procédé selon la revendication 1 ou 2, **caractérisé en ce qu'**avant chaque ponçage au moyen d'un des groupes de ponçage (2), une structure réelle de la surface est détectée et comparée avec la structure de consigne et le jeu de paramètres de ponçage à utiliser lors du ponçage est adapté en fonction du résultat de la comparaison.

4. Procédé selon l'une quelconque des revendications précédentes, **caractérisé en ce qu'**un état d'usure d'au moins un moyen de ponçage (4) d'au moins un des groupes de ponçage (2) est déterminé et le jeu de paramètres de ponçage d'au moins ce groupe de ponçage, de préférence de tous les groupes de ponçage à utiliser plus tard est adapté en fonction de l'état d'usure déterminé.

5. Procédé selon l'une quelconque des revendications précédentes, **caractérisé en ce que** la description de la structure de consigne est une représentation d'une surface référence ou d'une surface de référence.

6. Procédé selon l'une quelconque des revendications précédentes, **caractérisé en ce que** la structure de consigne est bidimensionnelle ou tridimensionnelle.

7. Procédé selon l'une quelconque des revendications précédentes, **caractérisé en ce qu'**un jeu de paramètres de ponçage contient une vitesse d'avance, une vitesse de moyen de ponçage, une pression ou sa distribution spatiale et/ou temporelle, avec laquelle le moyen de ponçage (4) est pressé contre la pièce à usiner, et/ou un trajet d'au moins un patin de pression et/ou barre de pression d'une position de repos à la position de ponçage.

8. Procédé selon l'une quelconque des revendications précédentes, **caractérisé en ce qu'**au moins un jeu de paramètres de ponçage, de préférence tous les jeux de paramètres de ponçage sont prédéterminés et/ou adaptés en fonction de données de mesure de capteur, qui ont été obtenues à partir de
- au moins une mesure de son, de vibrations et/ou de force au niveau d'un patin de pression et/ou barre de pression d'au moins un groupe de ponçage (2),
- au moins une mesure de déplacement au niveau d'au moins un patin de pression et/ou une barre de pression,
- au moins une mesure de la surface et/ou au moins une mesure de l'épaisseur de la pièce à usiner,
- une mesure de rugosité, de température et/ou de patinage d'au moins un moyen de ponçage,
- et/ou une mesure de couleur, de capacité et/ou de géométrie de la surface d'au moins un moyen de ponçage.

9. Procédé selon l'une quelconque des revendications précédentes, **caractérisé en ce que** la surface n'est pas poncée au moyen de tous les groupes de ponçage (2) de la machine de ponçage et les groupes de ponçage utilisés sont sélectionnés en tenant compte de l'état d'usure des moyens de ponçage de tous les groupes de ponçage.

10. Procédé selon l'une quelconque des revendications précédentes, **caractérisé en ce qu'**une position de la pièce à usiner par rapport à au moins un moyen de ponçage (4) d'au moins un groupe de ponçage (2) est adaptée en tenant compte de l'état d'usure du moyen de ponçage.

11. Procédé selon l'une quelconque des revendications précédentes, **caractérisé en ce que** la pièce à usiner est éclusée en tant que rebut, s'il est décelé lors de la comparaison de la structure réelle détectée avec la structure de consigne que la structure de consigne ne peut pas être atteinte ou si au moins un paramètre du jeu adapté de paramètres de ponçage se trouve en dehors d'une plage de valeurs prédéterminée, dans lequel de préférence une vitesse d'avance est augmentée.

12. Machine de ponçage pour la réalisation d'un procédé selon l'une quelconque des revendications précédentes, dans laquelle la machine de ponçage présente une commande électronique ou électrique, en particulier un équipement de traitement de données électronique (20), qui est conçue pour comparer une structure réelle détectée avec une description d'une structure de consigne enregistrée de préférence dans une mémoire de données (30) électronique et pour commander sur la base du résultat de cette comparaison les groupes de ponçage (2) à utiliser par la suite de telle sorte que des jeux modifiés et adaptés de paramètres de ponçage sont utilisés.
